# EUROPEAN PATENT APPLICATION

(11) **EP 4 316 311 A1**
(43) Date of publication of application: **07.02.2024**
(21) Application number: 22197093.2
(22) Date of filing: 22.09.2022
(51) Int. Cl.: A46B 17/04, A61C 17/22, A46B 9/04

(54) **ACCOMMODATION CASE FOR ELECTRIC TOOTHBRUSH**

(30) Priority: 01.08.2022 KR 20220095496
(71) Applicant: Genoss Co., Ltd., Suwon-si, Gyeonggi-do 16229 (KR)
(72) Inventor: CHUNG, Sung Min, 16229 Suwon-si, Gyeonggi-do (KR); LEE, Wan Kyu, 16229 Suwon-si, Gyeonggi-do (KR); KANG, Ki yoon, 16229 Suwon-si, Gyeonggi-do (KR); YANG, Dong jun, 16229 Suwon-si, Gyeonggi-do (KR)
(74) Representative: von Bülow & Tamada

(57) **Abstract**

Disclosed herein is an accommodation case for an electric toothbrush, as an accommodation case for an electric toothbrush for storing an electric toothbrush having an electric body and a brush head detachably coupled to the electric body, including a first housing and a second housing connected to each other and configured to accommodate the electric toothbrush, wherein the first and second housings are formed to have a length for accommodating at least a portion of the brush head and only a portion of the electric body and exposing the rest of the electric body, and the first housing includes a counteracting portion generating a counter moment against a rotational moment generated by the rest of the electric body, while the electric toothbrush is accommodated in the first housing.

## Description

### BACKGROUND

### Field

The present disclosure relates to an accommodation case used to store an electric toothbrush.

### Description of the Related Art

In general, a toothbrush is a sanitary device used to remove food debris, plaque, tartar, etc. caught between teeth after ingestion of food. The toothbrush plays a major role in preventing tooth decay, periodontal disease, and gingivitis.

In order to maximize the effect of brushing, it is generally recommended to brush for about 3 minutes. The recommended time is not short, so brushing during that time may put strain on a person's wrist. If control of a force for moving the toothbrush is unstable, the gums or the inside of the mouth may be injured, while brushing.

In order to eliminate this problem and increase user convenience, there is an electric toothbrush that rotates the bristles with an electric motor or that generates vibration or ultrasonic vibrations on the bristles. The electric toothbrush is effective in removing foreign substances in the teeth or oral cavity through the rotation of the bristles or the vibration of the bristles.

In the electric toothbrush, an electric body and a brush head are detachably coupled. This is to replace only the brush head when the brush head is worn. This is significantly different from the existing general toothbrush in which a head portion and a handle portion are integrally injection-molded.

An accommodation case is used to store the electric toothbrush. The accommodation case for an electric toothbrush has a configuration that is no different from an accommodation case for a general toothbrush, despite the difference between the general toothbrush and the electric toothbrush. In other words, the accommodation case for an electric toothbrush accommodates the electric body and the brush head in a coupled state. Slightly different, there is an accommodation case that accommodates the electric body and brush head separately from each other.

The former is the same as the existing general toothbrush accommodation method, and there is a problem in that a length of the accommodation case is also increased to correspond to a large length of the electric toothbrush. Regarding the latter, the length of the accommodation case is reduced, but a width thereof is increased, and it is cumbersome to separate and store the electric body and the brush head. Both the former and the latter entail the inconvenience of having to remove the electric toothbrush, or at least the electric body, from the accommodation case in order to charge the electric body.

### SUMMARY

An object of the present disclosure is to provide an accommodation case for an electric toothbrush which does not require removal of an electric body and a brush head for storage and which is reduced in length, while preventing the electric body and the brush head from being unintentionally separated.

Another object of the present disclosure is to provide an accommodation case for an electric toothbrush, which allows an electric toothbrush to be charged, while stored in the accommodation case.

Another object of the present disclosure is to provide an accommodation case for an electric toothbrush, which may prevent an electric toothbrush from being rotated and dropped by a rotational moment according to its own weight when the accommodation case is opened.

According to an embodiment of the present disclosure, there is provided an accommodation case for an electric toothbrush, as an accommodation case for an electric toothbrush for storing an electric toothbrush having an electric body and a brush head detachably coupled to the electric body, including a first housing and a second housing connected to each other and configured to accommodate the electric toothbrush, wherein the first and second housings are formed to have a length for accommodating at least a portion of the brush head and only a portion of the electric body and exposing the rest of the electric body, and the first housing includes a counteracting portion generating a counter moment against a rotational moment generated by the rest of the electric body, while the electric toothbrush is accommodated in the first housing.

The first housing may include a first accommodating space formed to be concave to correspond to the contours of at least the portion of the brush head and the portion of the electric body.

The counteracting portion may include a restraining member disposed in the first accommodating space to restrain at least one of at least the portion of the brush head and the portion of the electric body with respect to the first accommodating space.

The restraining member may be disposed to fix the brush head in the first accommodating space.

The restraining member may include a fixing protrusion protruding from one end of an inner wall of the first accommodating space in an extending direction of the first accommodating space.

The restraining member may include an insert inserted into a fixing recess formed at the brush head and an elastic member installed on an inner wall of the first accommodating space and elastically pressing the insert toward the fixing recess.

The restraining member may include a fixed magnetic member mounted on the inner wall of the first accommodating space to correspond to the brush magnetic member mounted on the brush head.

The second housing may include a second accommodating space formed to be concave to correspond to the contours of at least the portion of the brush head and the portion of the electric body, and the second accommodating space may be formed to have a portion in which at least one of a width and a depth significantly changes with respect to a periphery thereof or the first accommodating space.

The second accommodating space may include a button protective recess formed to be more concave than the periphery to correspond to a power button of the electric body.

The second accommodating space may include a brush accommodating recess corresponding to a brush of the brush head and having a width greater than a corresponding portion of the first accommodating space.

At least one of the first housing and the second housing may include a vent channel allowing the brush to communicate with outside air to correspond to the brush of the brush head.

The accommodation case may further include a hinge coupling unit connecting the first housing and the second housing, wherein the first housing, the second housing, and the hinge coupling unit may be formed as a single member.

The accommodation case may further include a magnetic coupling unit coupling the first housing and the second housing, wherein the magnetic coupling unit may include a first magnetic member mounted on the first housing and a second magnetic member mounted on the second housing to be magnetically coupled to the first magnetic member.

The accommodation case may further include a first cover coupled to the first housing and surrounding the first housing and a second cover coupled to the second housing and surrounding the second housing, wherein the first magnetic member is disposed between the first housing and the first cover and the second magnetic member is disposed between the second housing and the second cover.

According to an embodiment of the present disclosure, there is provided an accommodation case for an electric toothbrush, as an accommodation case for an electric toothbrush for storing an electric toothbrush having an electric body and a brush head detachably coupled to the electric body, including a first housing having a first accommodating space formed to be concave to correspond to contours of the entirety of the brush head and a portion of the electric body and a second housing having a second accommodating space formed to be concave to correspond to contours of the entirety of the brush head and a portion of the electric body and hinged to the first housing, wherein the first housing and the second housing are formed to have a length for accommodating the entirety of the brush head and only a portion of the electric body and exposing the rest of the electric body in a state in which the brush head is coupled to the electric body.

The second accommodating space may be formed to have a portion in which at least one of a width and a depth significantly changes with respect to a periphery thereof or the first accommodating space.

The accommodation case for an electric toothbrush according to the present disclosure configured as described above has the first housing and the second housing connected to each other, and the first housing and the second housing have a length accommodating at least a portion of the brush head and only a portion of the electric body and exposing the rest of the electric body, so that the electric body and the brush head may be stored, without being separated, even with an accommodation case having a smaller length than that of the related art. In addition, since the electric body and the brush head are protected by the first housing and the second housing while engaged, the electric body and the brush head are not unintentionally separated.

Since the rest of the electric body is exposed to the outside, while the electric toothbrush is stored in the accommodation case, the electric body may be charged through the exposed portion. Therefore, the user does not have to suffer the inconvenience of taking out the electric toothbrush stored in the accommodation case for charging.

In addition, since the first housing includes the counteracting portion for generating a counter moment against a rotational moment generated by the rest of the electric body, the electric toothbrush may be prevented from being rotated and dropped by the rotational moment as a user opens the accommodation case. Accordingly, it is possible to structurally prevent the electric toothbrush from being dropped and damaged due to the user's carelessness.

### BRIEF DESCRIPTION OF THE DRAWINGS

FIG. 1 is a perspective view showing an example in which an accommodation case for an electric toothbrush is used in a closed state, while accommodating the electric toothbrush, according to an embodiment of the present disclosure.
FIG. 2 is a coupled perspective view illustrating an open state, while the accommodation case for an electric toothbrush of FIG. 1 accommodates an electric toothbrush.
FIG. 3 is a perspective view of an accommodation case for an electric toothbrush of FIG. 1 viewed in an open state.
FIG. 4 is an enlarged partial perspective view of a main part of FIG. 3.
FIG. 5 is an exploded perspective view of the accommodation case for an electric toothbrush of FIG. 3 viewed in another direction.
FIG. 6 is a cross-sectional view showing another embodiment of a counteracting portion of FIG. 4.
FIG. 7 is a cross-sectional view showing another embodiment of the counteracting portion of FIG. 4.

### DETAILED DESCRIPTION

Hereinafter, an accommodation case for an electric toothbrush according to an embodiment of the present disclosure will be described in detail with reference to the accompanying drawings. In the present specification, the same and similar reference numbers are given to the same and similar components in different embodiments, and a description thereof is replaced with a first description.

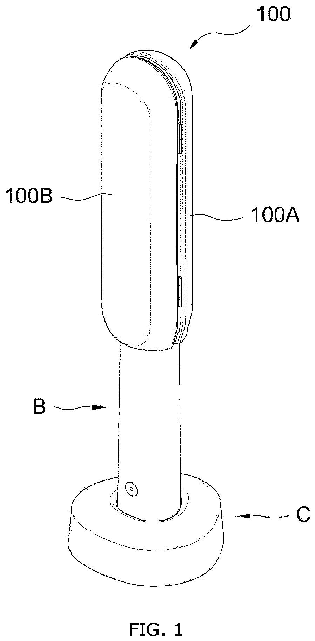

FIG. 1 is a perspective view showing an example in which an accommodation case for an electric toothbrush is used in a closed state, while accommodating the electric toothbrush, according to an embodiment of the present disclosure.

Referring to FIG. 1, an accommodation case 100 for an electric toothbrush is to accommodate and store an electric toothbrush B. When it is necessary to carry the electric toothbrush B for travel or the like, the accommodation case 100 may be effectively used.

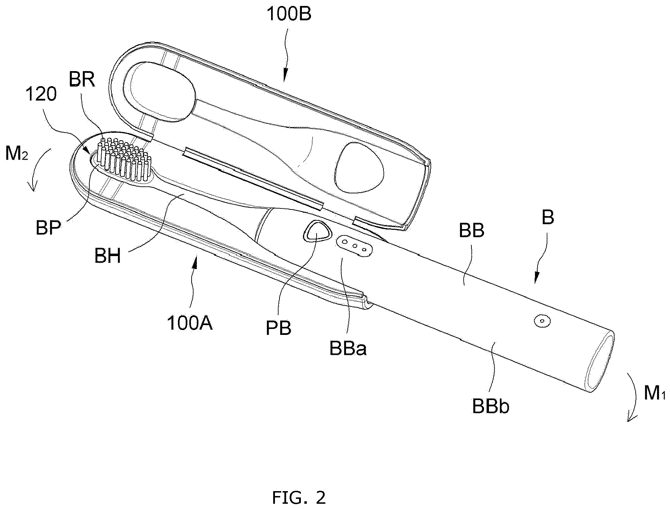

The accommodation case 100 includes two parts. Specifically, the accommodation case 100 is a combination of a first part 100A and a second part 100B. The first part 100A and the second part 100B may be coupled to be switched between a closed state (FIG. 1) and an open state (refer to FIG. 2) with respect to each other. The first part 100A and the second part 100B may also have substantially the same length with respect to each other in a direction in which the electric toothbrush B extends.

The first part 100A and the second part 100B accommodate only a portion but not the entirety of the electric toothbrush B. Specifically, the first part 100A and the second part 100B have a size that covers an upper portion of the electric toothbrush B and does not cover a lower portion.

According to this configuration, while the upper portion of the electric toothbrush B is protected by the accommodation case 100, the electric toothbrush B may be mounted on a charger C by the exposed portion. As a result, the user may charge the electric toothbrush B without having to take out the electric toothbrush B from the accommodation case 100.

An accommodation form of the electric toothbrush B with respect to the accommodation case 100 will be described with reference to FIG. 2. FIG. 2 is a coupled perspective view illustrating an open state of the accommodation case for an electric toothbrush, while accommodating an electric toothbrush of FIG. 1.

Referring to FIG. 2, the electric toothbrush B includes an electric body BB and a brush head BH. The electric body BB has a battery and a motor (not shown) embedded therein to generate vibration. The electric body BB is also a portion held by the user's hand. A power button PB for operating the motor may be disposed above the electric body BB. The brush head BH is detachably coupled to the electric body BB. A base plate BP is positioned above the brush head BH, and a brush BR is installed therein.

The first part 100A and the second part 100B accommodate the brush head BH and the electric body BB in a coupled state. At least a portion of the brush head BH is accommodated, whereas only a portion of the electric body BB is accommodated. This embodiment exemplifies a configuration in which the entire brush head BH is accommodated. A portion BBa of the electric body BB is accommodated in the first part 100A and the second part 100B, but the rest BBb is exposed to the outside. A power button PB may be disposed on a portion BBa. In addition, the rest BBb may be a portion held by the user when holding the electric body BB.

Compared to the portion BBa of the electric body BB, the rest BBb of the electric body BB may have a length approximately twice as long. In addition, since the battery and the motor are embedded in the rest BBb, a weight of the rest BBb is greater than a weight of the portion BBa and the brush head BH.

Due to this relationship, when the user rotates the second part 100B to enter an open state, a rotational moment M₁ is generated by the rest BBb. The rotational moment M₁ acts clockwise in the drawing, so that the electric toothbrush B rotates about an open end of the first part 100A. Thereby, when the user rotates the second part 100B, without holding the electric toothbrush B, the electric toothbrush B may rotate clockwise to be dropped to the floor. This may lead to serious consequences of damage to the electric toothbrush B.

As a countermeasure against this, a counteracting portion 120 for generating a counter moment M₂ with respect to the rotational moment M₁ is employed in the case 100. The counter moment M₂ generates a counterclockwise rotational force in the drawing, thereby preventing the electric toothbrush B from rotating in the clockwise direction due to the rotational moment M₁. The counteracting portion 120 may be formed in the first part 100A or the second part 100B, so as to act on the brush head BH and/or the portion BBa.

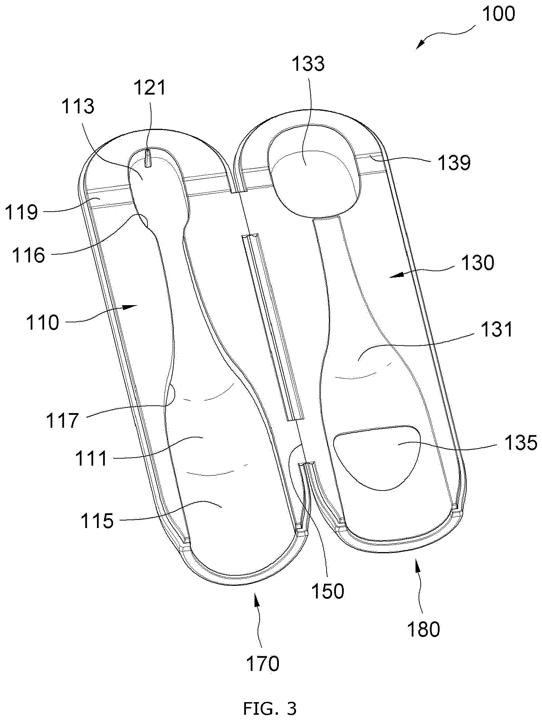

A specific configuration of the accommodation case 100 including the counteracting portion 120 will be described with reference to FIGS. 3 to 5.

FIG. 3 is a perspective view of the accommodation case for an electric toothbrush of FIG. 1 viewed in an open state.

Referring to FIG. 3, the configuration described above as the first part 100A in the accommodation case 100 may include a first housing 110 and a first cover 170. The configuration described as the second part 100B may include a second housing 130 and a second cover 180. The first housing 110 and the second housing 130 are rotatably coupled to each other by a hinge coupling unit 150.

The first housing 110 has a first accommodating space 111 formed to be concave to correspond to the contours of the entire brush head BH and a portion BBa of the electric body BB. The first accommodating space 111 may be divided into a base accommodating portion 113 and a body accommodating portion 115. The base accommodating portion 113 refers to a region accommodating, in particular, the base plate BP of the brush head BH. The body accommodating portion 115 refers to a region accommodating the portion BBa. A tapered retreating locking protrusion 116 is formed in the base accommodating portion 113. Similarly, an advancing locking protrusion 117 is tapered at the other portion corresponding to the brush head BH. The retreating locking protrusion 116 and the advancing locking protrusion 117 restrict the brush head BH from retreating or advancing along a longitudinal direction thereof. This prevents the brush head BH from moving in the longitudinal direction, in a state in which the brush head BH is positioned in the first accommodating space 111.

The first housing 110 may further include a vent channel 119. The vent channel 119 may be a groove formed on an upper surface of the body of the first housing 110. The vent channel 119 extends to the end of the body to allow the base accommodating portion 113 to communicate with the outside air. Thereby, the brush BR may be dried by outside air even in a state stored in the case 100.

The first housing 110 may also have a restraining member 121 as the counteracting portion 120. The restraining member 121 is formed to restrain at least a portion of the brush head BH or the portion BBa of the electric body BB with respect to the first accommodating space 111. The restraining member 121 is exemplified as restraining the brush head BH in the base accommodating portion 113 in the present embodiment.

The second housing 130 includes a second accommodating space 131 formed to be concave to correspond to the contours of at least a portion of the brush head BH and a portion BBa of the electric body BB. If the first accommodating space 111 accommodates the lower portions of the electric body BB and the brush head BH, the second accommodating space 131 is to accommodate upper portions thereof. In that respect, the second accommodating space 131 has a shape substantially similar to that of the first accommodating space 111.

However, the second accommodating space 131 is formed to have a portion that changes significantly in width or depth, compared with the periphery or the first accommodating space 111.

Specifically, a brush accommodating recess 133 for accommodating the brush BR is formed above the second accommodating space 131. The brush accommodating recess 133 has a width greater than the base accommodating portion 113 of the first accommodating space 111. A depth of the brush accommodating recess 133 may also be greater than a depth of the base accommodating portion 113. This may structurally prevent the brush BR from being pressed by the body of the second housing 130 to be bent.

A button protective recess 135 is formed below the second accommodating space 131 as a portion having a greater depth than the periphery. The button protective recess 135 is formed to be more concave than the periphery to protect the power button PB. Due to the deep depth of the button protective recess 135, the power button PB is rarely pressed even when impact is applied to the accommodation case 100 in the closed state.

The second housing 130 may also have a vent channel 139. The vent channel 139 may be formed as a groove corresponding to the vent channel 119 of the first housing 110. The vent channel 139 may also extend from the brush accommodating recess 133 to both ends of the body of the second housing 130.

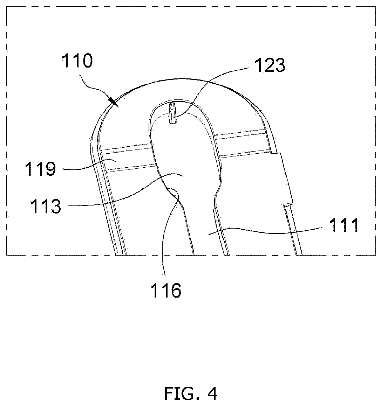

In the above description, the restraining member 121 will be described in more detail with reference to FIG. 4. FIG. 4 is an enlarged partial perspective view of a main part of FIG. 3.

Referring to this drawing, the restraining member 121 (refer to FIG. 3) may be a fixing protrusion 123 formed on an inner wall of the base accommodating portion 113.

The fixing protrusion 123 may be formed to protrude from an end of the inner wall in an extending direction of the first accommodating space 111. Specifically, the fixing protrusion 123 may be located on a central axis of the base accommodating portion 113. The corresponding position maximizes a distance from the open end of the first housing 110 to the fixing protrusion 123, so that a moment arm of the counter moment M2 is maximized. This offers the advantage that a magnitude of the counter moment M2 is maximized.

The fixing protrusion 123 may extend along a depth direction of the base accommodating portion 113. The corners thereof are formed to be rounded, so that it is not difficult to insert the base plate BP when the brush head BH is inserted into the base accommodating portion 113 along the depth direction.

According to this configuration, the fixing protrusion 123 fixes the brush head BH, thereby generating the counter moment M₂ (refer to FIG. 2).

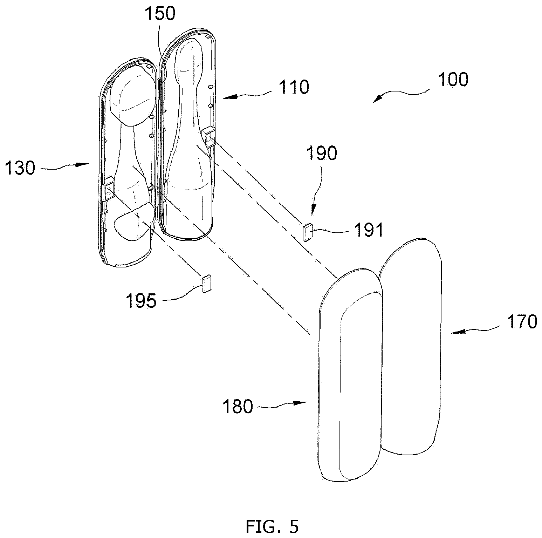

The hinge coupling unit 150, the first cover 170, and the second cover 180 will be further described with reference to FIG. 5. FIG. 5 is an exploded perspective view of the accommodation case for an electric toothbrush of FIG. 3 viewed in another direction.

Referring to this drawing, the first housing 110 and the second housing 130 are connected by a hinge coupling unit 150. The hinge coupling unit 150 may be provided as a pair in order to connect upper and lower portions thereof. Furthermore, the hinge coupling unit 150 may be integrally formed with the first housing 110 and the second housing 130 to form a single member.

Alternatively, the first cover 170 and the second cover 180 may be formed as independent members, respectively. The first cover 170 is coupled to the first housing 110, and the second cover 180 is coupled to the second housing 130.

In order to couple the first housing 110 to the second housing 130 in the closed state, a magnetic coupling unit 190 may be additionally provided. The magnetic coupling unit 190 makes magnetic coupling between the first magnetic member 191 and the second magnetic member 195. To this end, the first magnetic member 191 may be mounted on the first housing 110. Specifically, the first magnetic member 191 may be disposed between the first housing 110 and the first cover 170. Similarly, the second magnetic member 195 may be mounted on the second housing 130, specifically, between the second housing 130 and the second cover 180. Both the first magnetic member 191 and the second magnetic member 195 may be magnets, or one of them may be a magnet and the other may be a metal member.

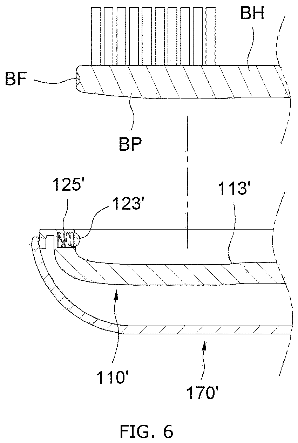

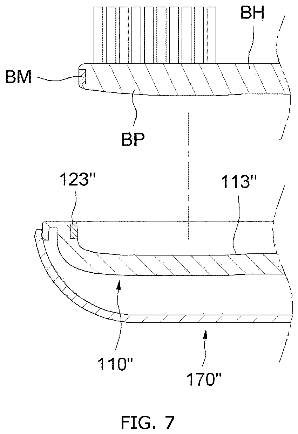

Hereinafter, a configuration different from the fixing protrusion 123 as a counteraction portion in FIG. 4 will be described with reference to FIGS. 6 and 7.

FIG. 6 is a cross-sectional view showing another embodiment of the counteracting portion of FIG. 4.

Referring to FIG. 6, an insert 123' and an elastic member 125' may be provided as another form of the counteracting portion 120 (refer to FIG. 2).

The insert 123' is configured to be inserted into a fixing recess BF formed in the base plate BP of the brush head BH. The insert 123' may be, for example, a steel ball.

The elastic member 125' is configured to elastically press the insert 123' toward the fixing recess BF. The elastic member 125' may be, for example, a coil spring. The elastic member 125' may be disposed in a recess formed in the body of the first housing 110'. The recess may be formed on the inner wall side of the base accommodating portion 113'. A portion of the insert 123' is also inserted into the recess, so that only the rest of the insert 123' may be exposed to the outside of the recess.

According to this configuration, when the brush head BH is inserted into the base accommodating portion 113', the insert 123' is retracted, while pressing the elastic member 125'. After the brush head BH is inserted into the base accommodating portion 113', the elastic member 125' is restored while the insert 123' is inserted into the fixing recess BF. In that case, the insert 123' and the elastic member 125' fix the brush head BH with respect to the base accommodating portion 113', thereby generating the counter moment M₂ (refer to FIG. 2).

FIG. 7 is a cross-sectional view showing another embodiment of the counteracting portion of FIG. 4.

Referring to FIG. 7, a fixed magnetic member 123" is provided as the counteracting portion 120 (refer to FIG. 2).

The fixed magnetic member 123" may be installed on an inner wall of a base accommodating portion 113" of a first housing 110". The fixed magnetic member 123" is positioned to correspond to the brush magnetic member BM installed in the brush head BH.

According to this configuration, the fixed magnetic member 123" is magnetically coupled to the brush magnetic member BM, and may also generate the counter moment M₂ (refer to FIG. 2).

The accommodation case for an electric toothbrush as described above is not limited to the configuration and operating method of the embodiments described above. All or some of the embodiments may be selectively combined to make various modifications.

## Claims

1. An accommodation case for an electric toothbrush, as an accommodation case for an electric toothbrush for storing an electric toothbrush having an electric body and a brush head detachably coupled to the electric body, the accommodation case comprising:
a first housing and a second housing connected to each other and configured to accommodate the electric toothbrush,
wherein the first and second housings are formed to have a length for accommodating at least a portion of the brush head and only a portion of the electric body and exposing the rest of the electric body, and
wherein the first housing includes a counteracting portion generating a counter moment against a rotational moment generated by the rest of the electric body, while the electric toothbrush is accommodated in the first housing.

2. The accommodation case of claim 1, wherein the first housing includes a first accommodating space formed to be concave to correspond to a contour of at least the portion of the brush head and the portion of the electric body.

3. The accommodation case of claim 2, wherein the counteracting portion includes a restraining member disposed in the first accommodating space to restrain at least one of at least the portion of the brush head and the portion of the electric body with respect to the first accommodating space.

4. The accommodation case of claim 3, wherein the restraining member is disposed to fix the brush head in the first accommodating space.

5. The accommodation case of claim 4, wherein the restraining member includes a fixing protrusion protruding from one end of an inner wall of the first accommodating space in an extending direction of the first accommodating space.

6. The accommodation case of claim 3, wherein
the restraining member includes:
an insert inserted into a fixing recess formed at the brush head; and
an elastic member installed on an inner wall of the first accommodating space and elastically pressing the insert toward the fixing recess.

7. The accommodation case of claim 3, wherein the restraining member includes a fixed magnetic member mounted on the inner wall of the first accommodating space to correspond to the brush magnetic member mounted on the brush head.

8. The accommodation case of claim 2, wherein
the second housing includes a second accommodating space formed to be concave to correspond to the contour of at least the portion of the brush head and the portion of the electric body, and
the second accommodating space is formed to have a portion in which at least one of width and depth significantly changes with respect to a periphery thereof or the first accommodating space.

9. The accommodation case of claim 8, wherein the second accommodating space includes a button protective recess formed to be more concave than the periphery to correspond to a power button of the electric body.

10. The accommodation case of claim 8, wherein the second accommodating space includes a brush accommodating recess corresponding to a brush of the brush head and having a width greater than a corresponding portion of the first accommodating space.

11. The accommodation case of claim 1, wherein at least one of the first housing and the second housing include a vent channel allowing the brush to communicate with outside air to correspond to the brush of the brush head.

12. The accommodation case of claim 1, further comprising:
a hinge coupling unit connecting the first housing and the second housing, wherein the first housing, the second housing, and the hinge coupling unit are formed as a single member.

13. The accommodation case of claim 1, further comprising:
a magnetic coupling unit coupling the first housing and the second housing,
wherein the magnetic coupling unit includes:
a first magnetic member mounted on the first housing; and
a second magnetic member mounted on the second housing to be magnetically coupled to the first magnetic member.

14. The accommodation case of claim 13, further comprising:
a first cover coupled to the first housing and surrounding the first housing; and
a second cover coupled to the second housing and surrounding the second housing,
wherein the first magnetic member is disposed between the first housing and the first cover and the second magnetic member is disposed between the second housing and the second cover.

15. An accommodation case for an electric toothbrush, as an accommodation case for an electric toothbrush for storing an electric toothbrush having an electric body and a brush head detachably coupled to the electric body, the accommodation case comprising:
a first housing having a first accommodating space formed to be concave to correspond to contours of the entirety of the brush head and a portion of the electric body; and
a second housing having a second accommodating space formed to be concave to correspond to contours of the entirety of the brush head and a portion of the electric body and hinged to the first housing,
wherein the first housing and the second housing are formed to have a length for accommodating the entirety of the brush head and only the portion of the electric body and exposing the rest of the electric body in a state in which the brush head is coupled to the electric body.

16. The accommodation case of claim 15, wherein the second accommodating space is formed to have a portion in which at least one of width and depth significantly changes with respect to a periphery thereof or the first accommodating space.
